# EUROPEAN PATENT SPECIFICATION

(11) **EP 2 713 837 B1**
(45) Date of publication and mention of the grant of the patent: **07.10.2015**
(21) Application number: 12728788.6
(22) Date of filing: 08.05.2012
(51) Int. Cl.: A47J 31/053, A47J 31/18

(54) **APPARATUS AND METHOD FOR PREPARING A BEVERAGE FROM A SOLVENT AND INGREDIENTS**
VORRICHTUNG UND VERFAHREN ZUR HERSTELLUNG EINES GETRÄNKS AUS EINEM LÖSUNGSMITTEL UND ANDEREN BESTANDTEILEN
APPAREIL ET PROCÉDÉ POUR PRÉPARER UNE BOISSON À PARTIR D'UN SOLVANT ET D'INGRÉDIENTS

(30) Priority: 23.05.2011 WO PCT/CN2011/074523
(43) Date of publication of application: 09.04.2014
(73) Proprietor: Koninklijke Philips N.V., 5656 AE Eindhoven (NL)
(72) Inventor: HA, Wan, Kei, Ricky, NL-5656 AE Eindhoven (NL)
(74) Representative: Coops, Peter
(86) International application number: PCT/IB2012/052279
(87) International publication number: WO 2012/160466

(56) References cited:
- US-A- 2 975 723
- US-A- 4 464 983
- US-A- 5 868 062

## Description

### FIELD OF THE INVENTION

The invention relates to an apparatus for and a method of preparing a beverage from a solvent and ingredients.

The invention may be used in the field of beverage preparation.

### BACKGROUND OF THE INVENTION

When preparing a beverage from a solvent and ingredients, users often perform a preliminary rinsing step of the ingredients for hygienic purposes, so that dirt and other impurities are removed from the ingredients.

This is for example the case when preparing a tea beverage from water and tea leaves. To some tea drinkers, tea rinsing is a necessary step in in the tea making process, wherein the first tea brew is not consumed and is either thrown away or used for other purposes like cup rinsing. Then, after rinsing the tea leaves, the tea leaves are brewed in water, resulting in the tea beverage. In spite of modem tea production methods that greatly improve tea cleanliness and hygiene, the practice of tea rinsing still persists.

Patent US 201010263549 A1 describes an infusing apparatus or beverage container including a container, a perforated infuser configured to be positioned in the container, and an actuator including an activating member and an actuator body. The activating member is accessible from outside the interior space and rotatably coupled with respect to the container, and the actuator body is rotatably coupled to the infuser, such that rotation of the actuator body with respect to the container can lower and raise the infuser with respect to the container to selectively begin and cease an infusion process and drink the resulting beverage without having to remove ingredients placed in the infuser.

The apparatus described in Patent US 201010263549 A1 is adapted to perform brewing of ingredients, but has some limitations in the sense that it is not adapted to perform preliminary rinsing of ingredients put in the infuser. If a user of this apparatus wants to perform preliminary rinsing of ingredients, the user must manually throw away the beverage in the container resulting from the rinsing process, which is not convenient. Moreover, if a user performs this manual rinsing step, some nutrients contained in the ingredients may also be carried away because the rinsing can hardly be controlled by the user, thereby risking reducing the nutritional contents of the beverage obtained after brewing.

Another apparatus for preparing a beverage from a solvent and ingredients is known from US5868062

### SUMMARY OF THE INVENTION

It is an object of the invention to propose an improved apparatus and method for preparing a beverage from a solvent and ingredients. The invention is defined by the independent claims. The dependent claims define advantageous embodiments.

To this end, the apparatus according to the invention comprises:
- a container for containing said solvent,
- an infuser for containing said ingredients,
- a first system for carrying solvent from said container into said infuser, and
- a second system adapted to assume a first position for carrying solvent being in the infuser from said container, and a second position for carrying solvent being in the infuser back into said container.

This apparatus allows preparing a beverage from a solvent and ingredients by subjecting the ingredients to preliminary rinsing in a manner which is simple for the user. Also, this apparatus allows the user to easily control the rinsing of ingredients with respect to time, amount of water, etc., thereby minimizing nutritional loss (e.g. catechins in tea) during rinsing the ingredients.

Detailed explanations and other aspects of the invention will be given below.

### BRIEF DESCRIPTION OF THE DRAWINGS

The particular aspects of the invention will now be explained with reference to the embodiments described hereinafter and considered in connection with the accompanying drawings, in which identical parts or sub-steps are designated in the same manner:
Fig.1 depicts schematically an apparatus according to the invention,
Fig.2 depicts a drainage assembly used in an apparatus according to the invention,
Fig.3 depicts a drainage assembly used in an apparatus according to the invention,
Fig.4 depicts top views of an apparatus according to the invention,
Fig.5 depicts cross-sectional views of an apparatus according to the invention,
Fig.6 depicts top views of an apparatus according to the invention,
Fig.7 depicts cross-sectional views of an apparatus according to the invention,
Fig.8 depicts a drainage assembly used in an apparatus according to the invention,
Fig.9 depicts a drainage assembly used in an apparatus according to the invention,
Fig.10 depicts top views of an apparatus according to the invention,
Fig.11 depicts cross-sectional views of an apparatus according to the invention,
Fig.12 depicts top views of an apparatus according to the invention,
Fig.13 depicts cross-sectional views of an apparatus according to the invention,
Fig.14 depicts a drainage assembly used in an apparatus according to the invention,
Fig.15 depicts top views of an apparatus according to the invention,
Fig.16 depicts cross sectional views of an apparatus according to the invention,
Fig.17 depicts a drainage assembly used in an apparatus according to the invention,
Fig.18 depicts a drainage assembly used in an apparatus according to the invention,
Fig.19 depicts cross-sectional views of an apparatus according to the invention,
Fig.20 depicts top views of an apparatus according to the invention,
Fig.21 depicts cross-sectional views of an apparatus according to the invention,
Fig.22 depicts a drainage assembly used in an apparatus according to the invention,
Fig.23 depicts an apparatus according to the invention,
Fig.24 depicts an apparatus according to the invention,
Fig.25 depicts an apparatus according to the invention.

### DETAILED DESCRIPTION OF PREFERRED EMBODIMENTS

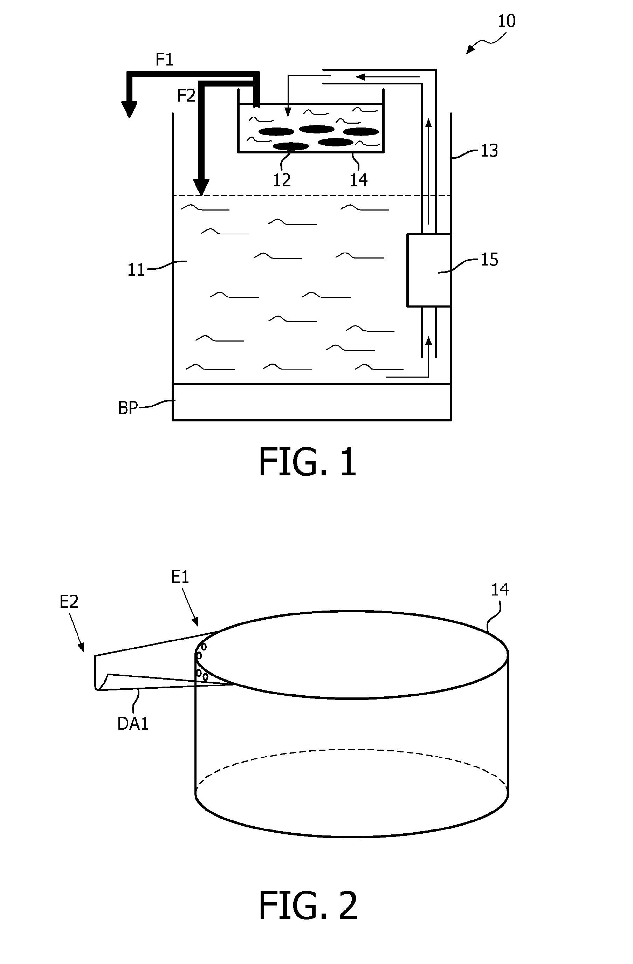

Fig.1 depicts an apparatus 10 for preparing a beverage from a solvent 11 and ingredients 12 according to an embodiment of the invention. The apparatus 10 comprises:
- a container 13 for containing said solvent,
- an infuser 14 for containing said ingredients,
- a first system 15 for carrying solvent from said container into said infuser, and
- a second system adapted to assume a first position P1 for carrying solvent being in the infuser from said container, and a second position P2 for carrying solvent being in the infuser back into said container.

The solvent is preferably selected, without limitation, from among the following solvents, or a mix of the following solvents: water, mineral water, tap water, salted water, alcohol.

The ingredients may be selected, without limitation, from among at least one of the following ingredients: tea leaves, plant leaves, coffee grind, herbs, plant roots, fruits, dry fruits.

After the solvent has been carried into the infuser by the first system 15, the second system allows carrying solvent being in the infuser from said container, as schematically illustrated by arrow F1, and carrying solvent being in the infuser back into said container, as schematically illustrated by arrow F2. The step of carrying solvent being in the infuser from said container is used to rinse ingredients in the infuser. By positioning the second system in the first position P1 during a given period of time, for example a time duration indicated to the user depending on the ingredients used, part of the solvent initially in the container is carried by the first system 15 into the infuser for rinsing the ingredients, and the solvent in the infuser is then carried out of the container., By positioning the second system in the second position P2 after rinsing of the ingredients has been performed, the solvent in the infuser is carried back into the container so that the closed circulation of the solvent from the container to the infuser allows brewing the ingredients. This closed circulation is continued until the solvent in the container has reached a desired level of infusion of ingredients in the solvent.

Advantageously, the infuser 14 is preferably placed at an upper part of the container, above the solvent. Optionally, the container comprises a bottom part BP that is used to strengthen the structure of the container, or to embed various elements, as will be further detailed herein below.

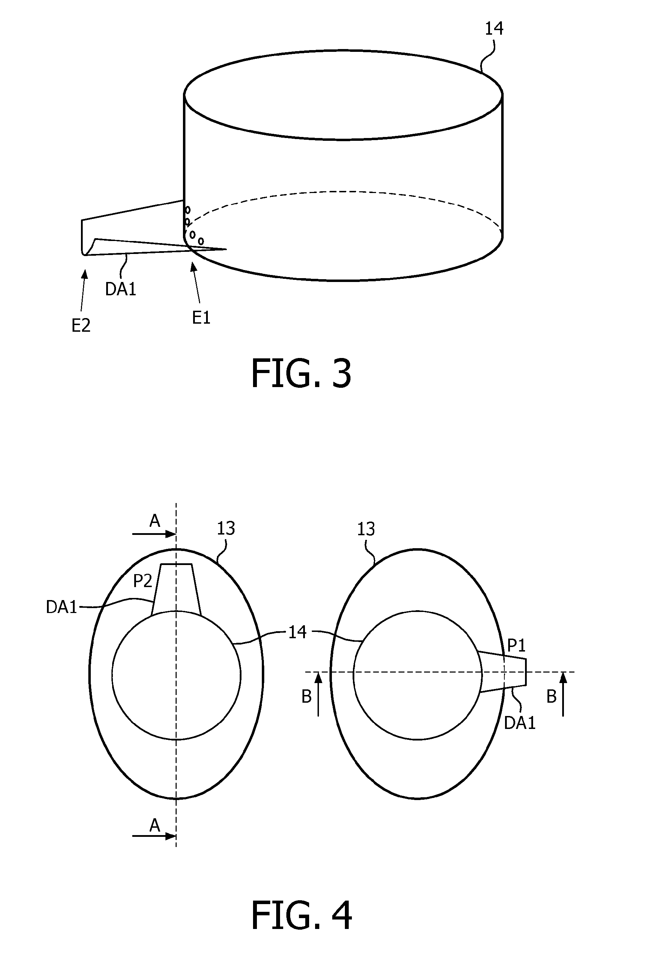

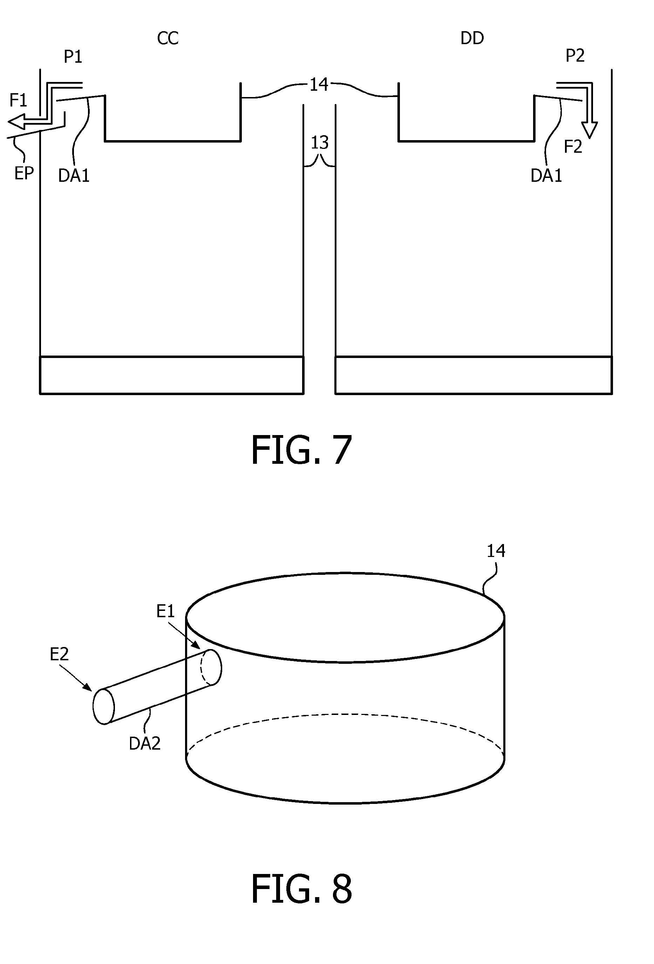

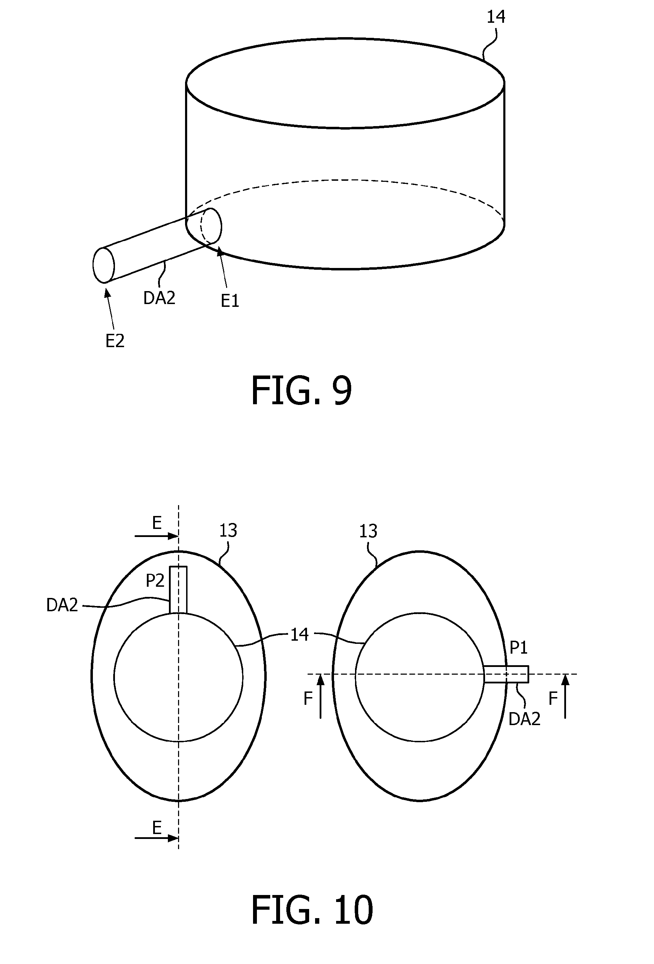

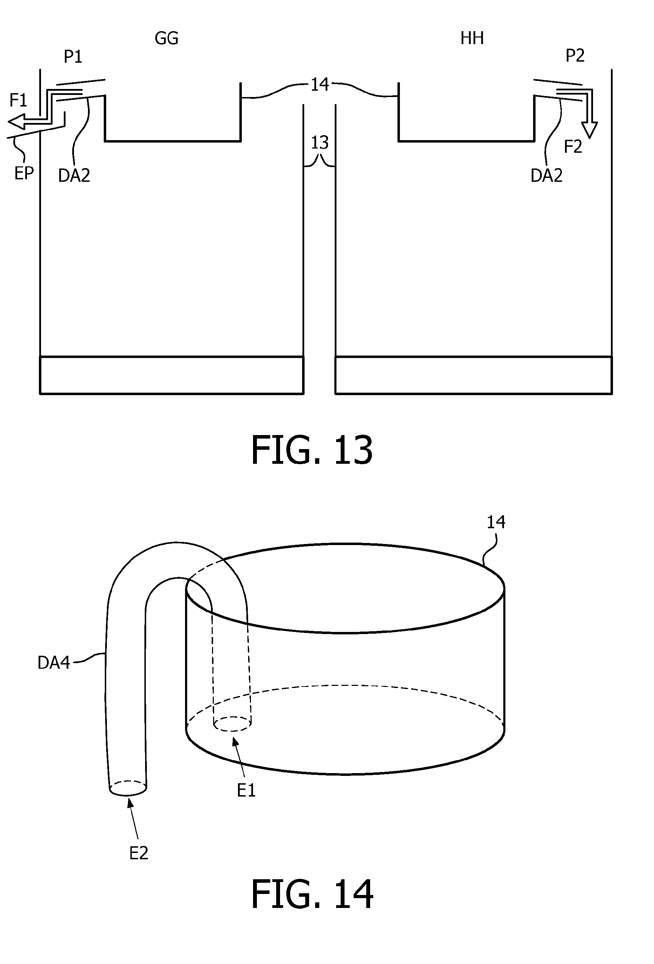

In a preferred embodiment, the second system is the infuser 14 itself. The infuser comprises a drainage assembly having a first end E1 and a second end E2. The first end E1 is intended to communicate with solvent being inside said infuser. The drainage assembly may correspond to:
- an open conduit structure DA1 placed at an upper part of the infuser, as depicted in Fig.2,
- an open conduit structure DA1 placed at a lower part of the infuser, as depicted in Fig.3,
- a pipe assembly DA2 placed at an upper part of the infuser, as depicted in Fig.8,
- a pipe assembly DA2 placed at a lower part of the infuser, as depicted in Fig.9,
- a siphon assembly DA4, as depicted in Fig.14.

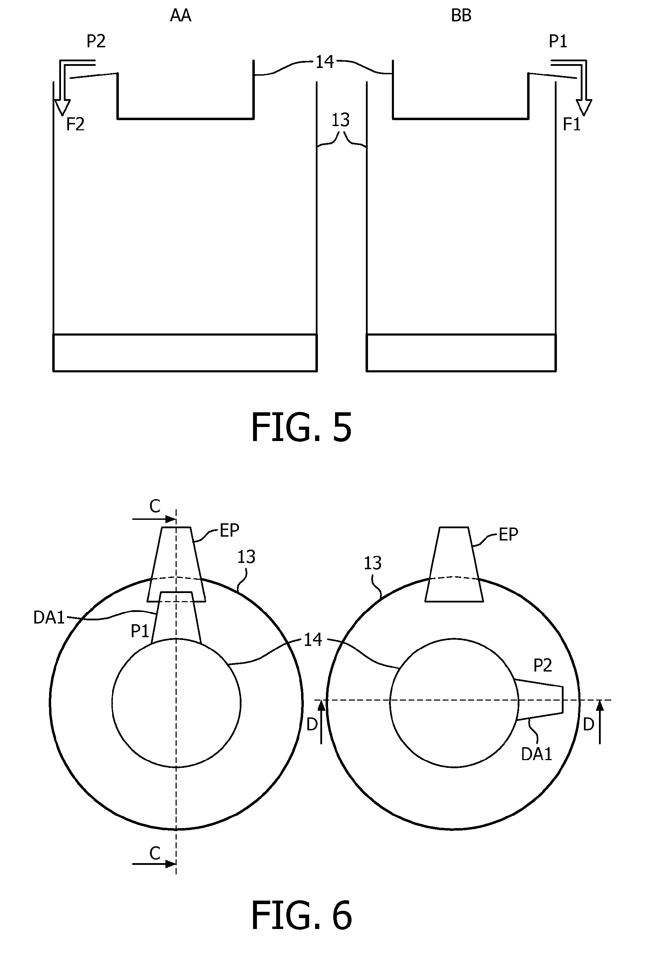

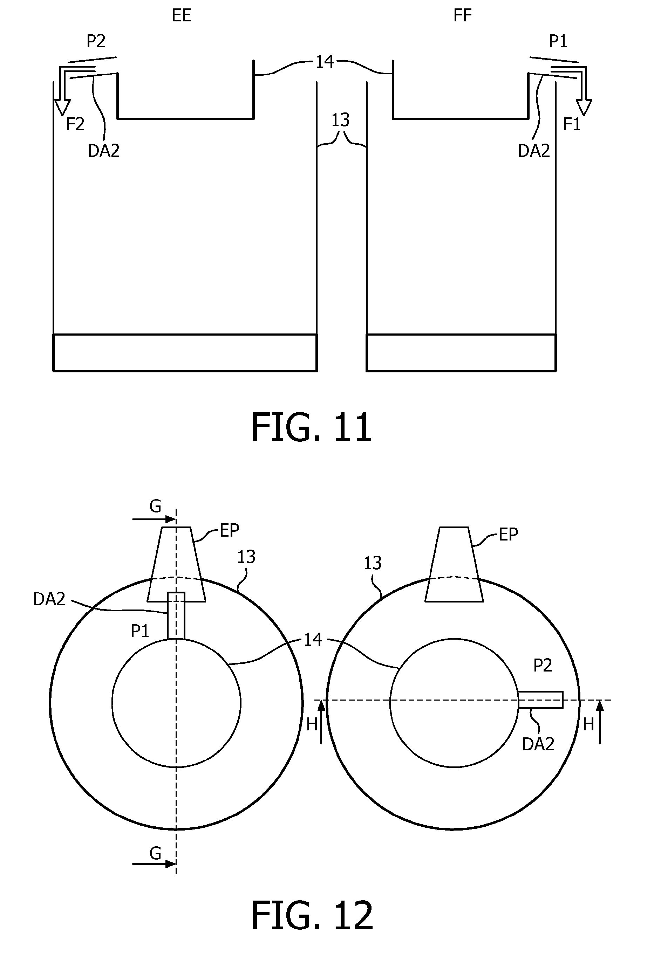

The container comprises walls which are shaped so as to be asymmetric in section, such that said second end E2 can communicate with the exterior of said container in said first position P1), and such that said second end E2 can communicate with the interior of said container in said second position P2. Fig.4-10-15 depict top views of an apparatus according to the invention, also represented via cross-sections depicted in Fig.5-11-16, respectively, where the walls of the container are elliptically shaped. In this case, the walls of the container extend along two main axes, with a different length along each of said two axes. Similarly (not shown), the walls of the container could be rectangular-shaped. As depicted in Fig. 5-11-16, when the infuser 14 is in the first position P1), solvent in the infuser 14 is carried out of the container because the drainage assembly extends outside the walls of the container, whereas when the infuser 14 is in the second position P2), solvent in the infuser 14 is carried back into the container because the drainage assembly extends inside the walls of the container.

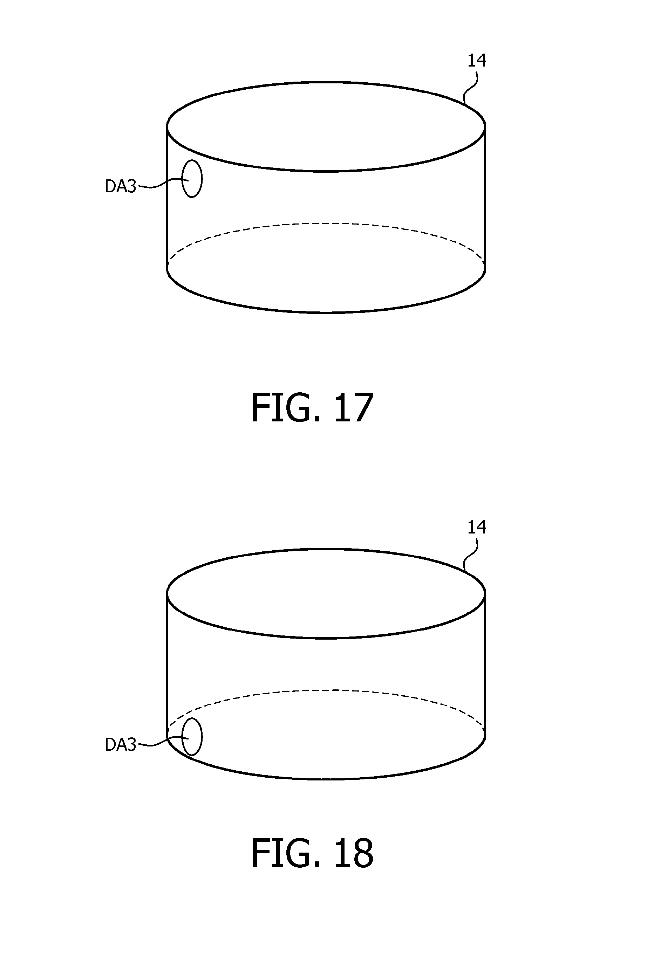

In another preferred embodiment, the second system is the infuser 14 itself. The container comprises an exit path EP. The infuser comprises:
- a drainage assembly having a first end E1 and a second end E2), said first end E1 being intended to communicate with solvent being inside said infuser, and said second end E2 being intended to communicate with said exit path EP in said first position P1, and to communicate inside said container in said second position P2,
- an open conduit structure DA1 placed at an upper part of the infuser, as depicted in Fig.2,
- an open conduit structure DA1 placed at a lower part of the infuser, as depicted in Fig.3,
- a pipe assembly DA2 placed at an upper part of the infuser, as depicted in Fig.8,
- a pipe assembly DA2 placed at a lower part of the infuser, as depicted in Fig.9,
- a hole DA3 in walls of said infuser placed at an upper part of the infuser, as depicted in Fig.17,
- a hole DA3 in walls of said infuser placed at a lower part of the infuser, as depicted in Fig.18,
- a siphon assembly DA4, as depicted in Fig.14.

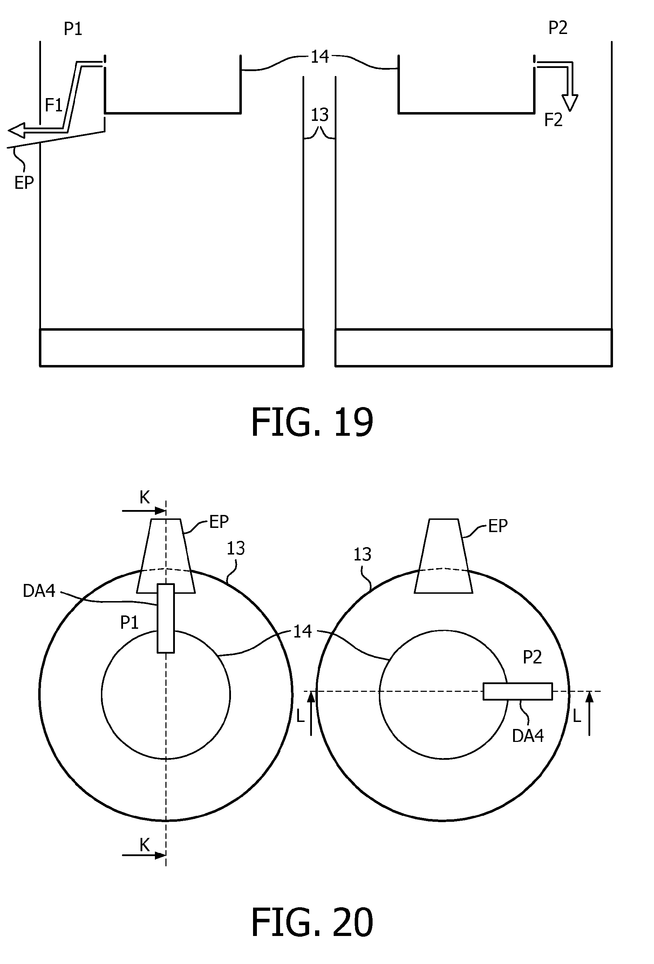

Fig.6-12-20 depict top views of an apparatus according to the invention, also represented in the cross-sectional views of Fig.7-13-21, respectively. The exit path EP has one part extending inside the container, and one part extending outside the walls of the container. As depicted in Fig.7-13-21, when the infuser 14 is in the first position P1), the second end of the drainage assembly is located above the part of the exit path being inside the container, which results in the solvent in the infuser 14 being carried out of the container via the exit path, whereas when the infuser 14 is in the second position P2), the second end of the drainage assembly is more located above the part of the exit path being inside the container, which results in the solvent in the infuser 14 being carried back into the container.

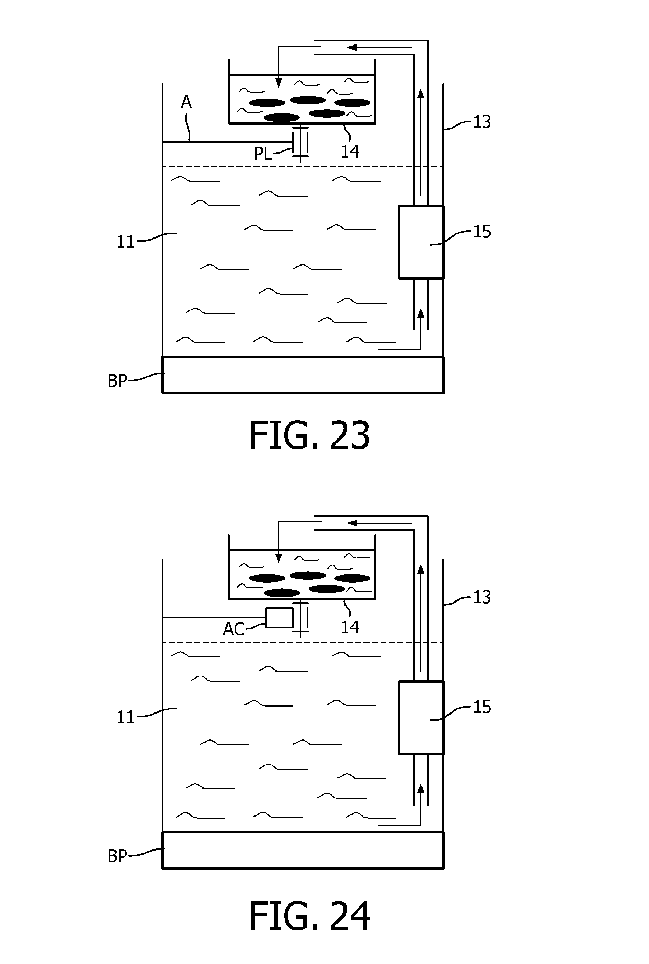

Advantageously, as depicted in the apparatus of Fig.23, the infuser is adapted to rotate from the first position P1 to the second position P2), and to rotate from the second position P2 to the first position P1. If the center of the infuser is taken as a reference, the angle of rotation is for example 90 degrees, as illustrated in the various top views. To this end, the infuser is mounted on a pivoting link PL connected to the walls of the container via an arm A. Advantageously, as depicted in Fig.24, this apparatus further comprises an actuator AC that can be activated by a user for rotating the infuser, such as an electrical motor activated by a switch (not shown) operated by the user to move the second system between the first position P1 and the second position P2.

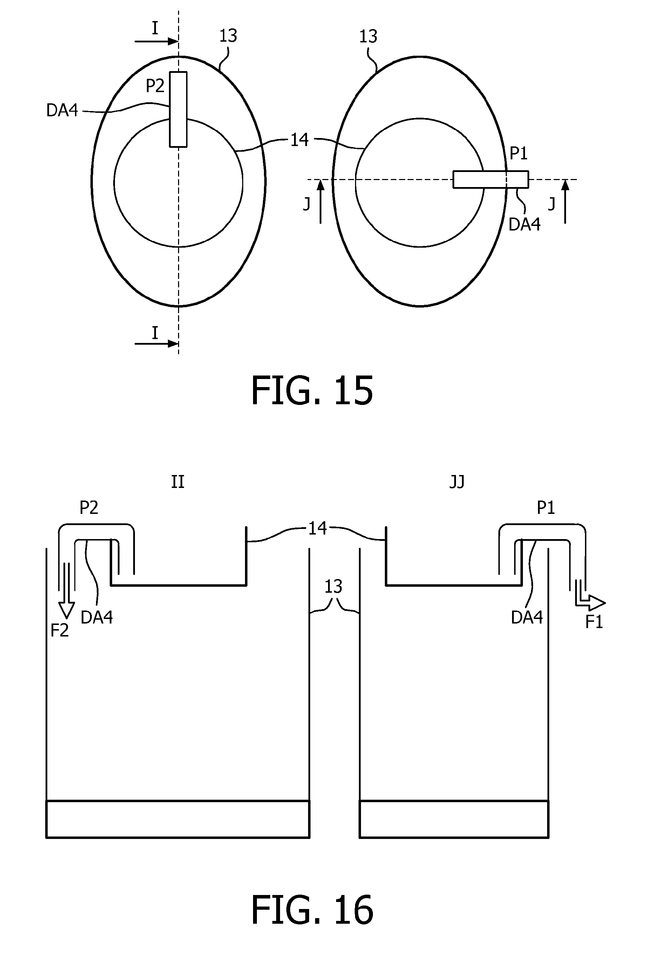

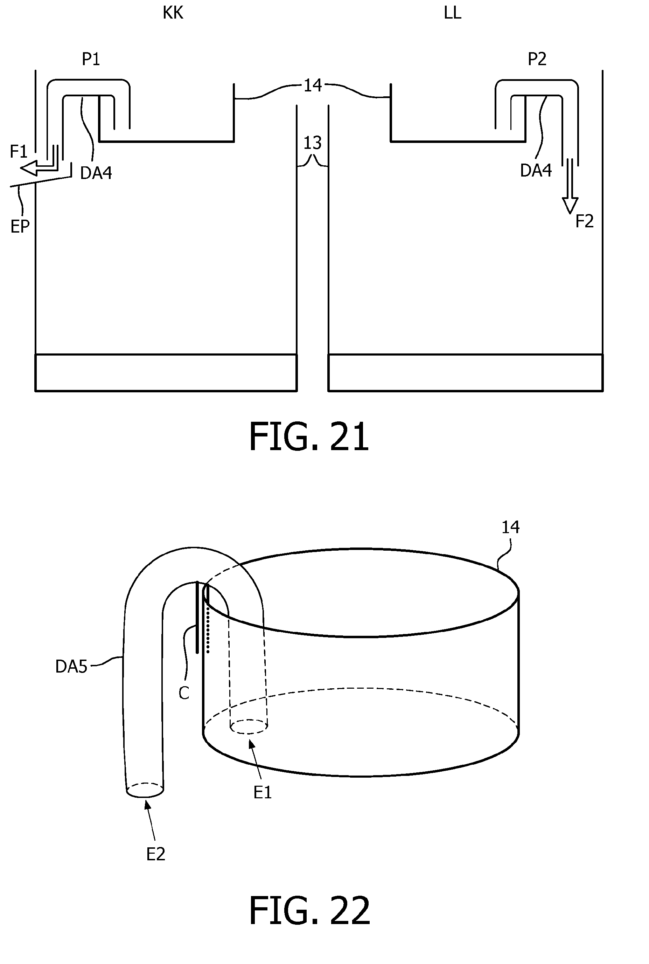

In another preferred embodiment, the second system comprises a drainage assembly mounted on the infuser 14. According to this embodiment, the infuser is fixed, while the drainage assembly can move between the first position P1 and the second position P2. As depicted in Fig.22, the drainage assembly DA5 may correspond to a siphon assembly DA5 comprising a mechanism C, such as a clip, to allow the drainage assembly to move (e.g. through manual user action) along the upper edge of infuser 14 between the first position P1 and the second position P2. This drainage assembly can advantageously be mounted on an apparatus as depicted in Fig.15-16-20-21.

In the various apparatus according to the invention described above, the container further comprises a heating element (not shown) placed in the bottom part BP of the container. The heating element is intended for heating the solvent. For example, the heating element may correspond to a resistor (not illustrated) connected to an electrical source. The heating element is intended for heating the solvent in the container, so that heated solvent is used in the infuser for rinsing ingredients, and then for brewing ingredients in the container.

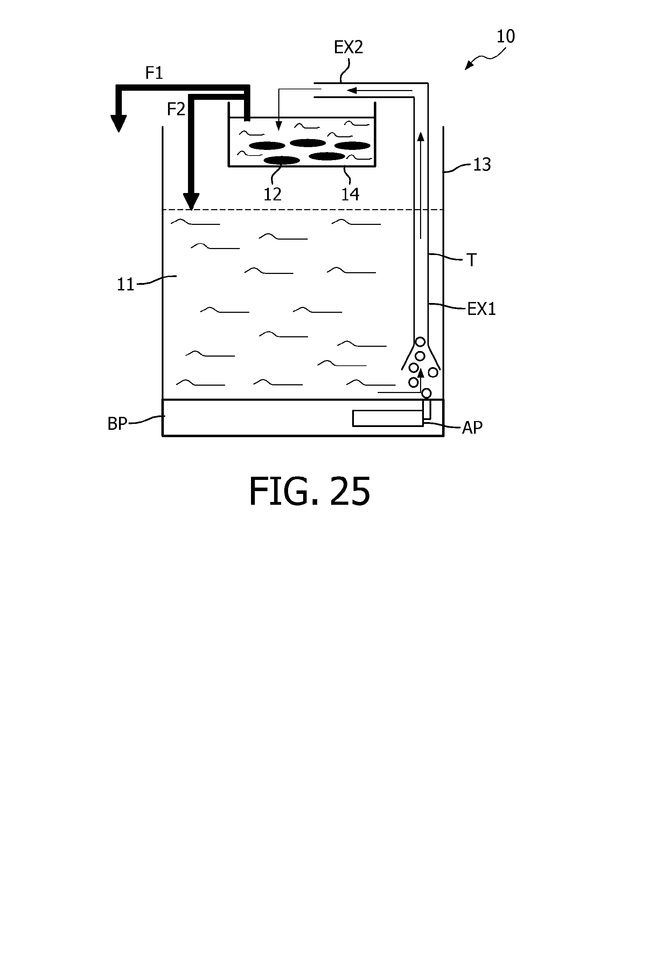

In the various apparatus according to the invention described above, the first system 15 comprises a fluid pump for pumping solvent from said container into said infuser. Alternatively, as depicted in Fig.25, the first system 15 comprises:
- a tube T placed in the container, said tube having a first extremity EX1 placed in the proximity of a bottom part BP of the container, and a second extremity EX2 reaching the infuser 14, and
- an air pump AP for generating an air flow exiting at said bottom part and entering the tube at said first extremity, for carrying said solvent in said tube from said first extremity to said second extremity.

The air flow is illustrated by empty circles in solvent, under the first extremity. The air pump may be of any type, but is preferably a diaphragm air pump. Air originating from outside the container is pumped into the container. It is appreciated that the tube T preferably extends vertically, so as to facilitate the movement of the air flow and the solvent in the tube. However, the tube may also be such that its main axis departs from the vertical direction, for example by an angle between 0 and 45 degrees. Also, the tube T is preferably cylindrical-shaped, but may alternatively have different shapes, such as a corkscrew-shape, or a curved-shape. The tube T advantageously has an average diameter between 5 and 7 millimeters, or an average sectional area between 19.6 and 38.5 square millimeters. Advantageously, as illustrated, the first extremity of tube T has a funnel-shaped entrance so that an air flow generated by the air pump can more easily enter the tube. The air pump advantageously generates an air flow of between 1 and 2 liters per minute, and in order for the tube to be efficient at least 80 % of this air flow should enter the tube at the first extremity. By generating an air flow by means of the air pump instead of vapor bubbles naturally generated by locally boiling water, as is the case with a standard percolator, the solvent can reach the upper part of the tube while having a temperature much below the boiling temperature of the solvent, which temperature can thus be adapted to the ingredients used. Preferably, if a heating element is used in the bottom part of the container, the heating power of the heating element is such that the solvent is heated to a temperature in excess of 60 degrees Centigrade, so as to improve the pumping effect in the tube T.

The invention also relates to a method of preparing a beverage from a solvent and ingredients, using a container containing the solvent and an infuser containing the ingredients. The method corresponds to various steps conducted by the various apparatus according to the invention described above. The method comprises the steps of:
- carrying solvent from said container into said infuser,
- carrying solvent being in the infuser from said container: this step is carried out to perform the rinsing of ingredients.
- carrying solvent being in the infuser back into said container: this step is carried out to perform the brewing of ingredients.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. A single unit may fulfill the functions of several items recited in the claims. The mere fact that certain measures are recited in mutually different dependent claims does not indicate that a combination of these measures cannot be used to advantage. Any reference signs in the claims should not be construed as limiting the scope.

## Claims

1. An apparatus (10) for preparing a beverage from a solvent (11) and ingredients (12), said apparatus comprising:
- a container (13) for containing said solvent,
- an infuser (14) for containing said ingredients,
- a first system (15) for carrying solvent from said container into said infuser, **characterized in that** the apparatus further comprises
- a second system adapted to assume a first position (P1) for carrying solvent being in the infuser out of said container, and a second position (P2) for carrying solvent being in the infuser back into said container.

2. Apparatus as claimed in claim 1, wherein said second system is the infuser (14) itself.

3. Apparatus as claimed in claim 1, wherein said second system comprises a drainage assembly mounted on said infuser.

4. Apparatus as claimed in claim 2, wherein said infuser comprises a drainage assembly having a first end (E1) and a second end (E2), said first end (E1) being intended to communicate with solvent being inside said infuser, said container comprising walls which are shaped so as to be asymmetric in section such that said second end (E2) can communicate outside said container in said first position (P1), and such that said second end (E2) can communicate inside said container in said second position (P2).

5. Apparatus as claimed in claim 2, wherein said container comprises an exit path (EP), and wherein said infuser comprises a drainage assembly having a first end (E1) and a second end (E2), said first end (E1) being intended to communicate with solvent being inside said infuser, said second end (E2) being intended to communicate with said exit path (EP) in said first position (P1) and to communicate inside said container in said second position (P2).

6. Apparatus as claimed in claim 4 or 5, wherein said drainage assembly comprises an open conduit structure (DA1).

7. Apparatus as claimed in claim 4 or 5, wherein said drainage assembly comprises a pipe assembly (DA2).

8. Apparatus as claimed in claim 5, wherein said drainage assembly forms a hole (DA3) in walls of said infuser.

9. Apparatus as claimed in claim 3, 4 or 5, wherein said drainage assembly comprises a siphon assembly (DA4).

10. Apparatus as claimed in claim 2, wherein said infuser is adapted to rotate from said first position (P1) to said second position (P2), and to rotate from said second position (P2) to said first position (P1).

11. Apparatus as claimed in claim 10, further comprising an actuator (AC) for rotating said infuser.

12. Apparatus as claimed in claim 1, 2 or 3, wherein said first system comprises a fluid pump (15) for pumping solvent from said container into said infuser.

13. Apparatus as claimed in claim 1, 2 or 3, wherein said first system comprises:
- a tube (T) placed in the container, said tube having a first extremity (EX1) placed in the proximity of a bottom part (BP) of the container, and a second extremity (EX2) reaching the infuser 14, and
- an air pump (AP) for generating an air flow exiting at said bottom part and entering the tube at said first extremity, for carrying said solvent in said tube from said first extremity to said second extremity.

14. A method of preparing a beverage from a solvent and ingredients, using a container containing the solvent and an infuser containing the ingredients, said method comprising the steps of:
- carrying solvent from said container into said infuser,
- carrying solvent being in the infuser out of said container,
- carrying solvent being in the infuser back into said container.

## Patentansprüche

1. Ein Apparat (10) zum Zubereiten eines Getränks aus einem Lösemittel (11) und Zutaten (12), der Apparat umfassend:
- einen Behälter (13) zur Aufnahme des Lösemittels,
- einen Aufgießer (14) zur Aufnahme der Zutaten,
- ein erstes System (15) zum Leiten des Lösemittels aus dem Behälter in den Aufgießer,
**dadurch gekennzeichnet, dass** der Apparat des Weiteren umfasst:
- ein zweites System, angepasst zur Einnahme einer ersten Position (P1) zum Leiten des Lösemittels im Aufgießer aus dem Behälter, und einer zweiten Position (P2) zum Leiten des Lösemittels im Aufgießer zurück in den Behälter.

2. Apparat nach Anspruch 1, wobei das zweite System der Aufgießer (14) selbst ist.

3. Apparat nach Anspruch 1, wobei das zweite System eine Dränageeinheit montiert am Aufgießer umfasst.

4. Apparat nach Anspruch 2, wobei der Aufgießer eine Dränageeinheit mit einem ersten Ende (E1) und ein zweites Ende (E2) umfasst, wobei das erste Ende (E1) dazu dient, mit dem enthaltenen Lösemittel im Aufgießer zu verbinden, und wobei der Behälter Wände aufweist, die so geformt sind, dass sie im Querschnitt asymmetrisch sind, sodass das zweite Ende (E2) zur Außenseite des Behälter in der ersten Position (P1) verbinden kann, und sodass das zweite Ende (E2) zur Innenseite des Behälter in der zweiten Position (P2) verbinden kann.

5. Apparat nach Anspruch 2, wobei der Behälter einen Auslasspfad (EP) umfasst, und wobei der Aufgießer eine Dränageeinheit mit einem ersten Ende (E1) und einem zweiten Ende (E2) umfasst, wobei das erste Ende (E1) dazu dient, mit dem enthaltenen Lösemittel im Aufgießer zu verbinden, und wobei das zweite Ende (E2) dazu dient, mit dem Auslasspfad (EP) in der Position (P1) zu verbinden, und zur Innenseite des Behälter in der zweiten Position (P2) zu verbinden.

6. Apparat nach Anspruch 4 oder 5, wobei die Dränageeinheit eine offene Leitungsstruktur (DA1) aufweist.

7. Apparat nach Anspruch 4 oder 5, wobei die Dränageeinheit eine offene Leitungseinheit (DA2) aufweist.

8. Apparat nach Anspruch 5, wobei die Dränageeinheit eine Öffnung (DA3) in den Wänden des Aufgießers aufweist.

9. Apparat nach Anspruch 3, 4 oder 5, wobei die Dränageeinheit eine Syphoneinheit (DA4) aufweist.

10. Apparat nach Anspruch 2, wobei der Aufgießer angepasst ist, um aus der ersten Position (P1) zur zweiten Position (P2) zu drehen, und um von der zweiten Position (P2) zur ersten Position (P1) zu drehen.

11. Apparat nach Anspruch 10, des Weiteren umfassend ein Stellglied (AC) zum Drehen des Aufgießers.

12. Apparat nach Anspruch 1, 2 oder 3, wobei das erste System eine Flüssigkeitspumpe (15) zum Pumpen des Lösemittels vom Behälter in den Aufgießer umfasst.

13. Apparat nach Anspruch 1, 2 oder 3, wobei das erste System umfasst:
- ein Rohr (T) angeordnet im Behälter mit einem ersten Endpunkt (EX1) angeordnet in der Nähe eines Bodenabschnitts (BP) des Behälters, und einen zweiten Endpunkt (EX2), das den Aufgießer 14 erreicht, und
- eine Luftpumpe (AP) zum Erzeugen eines Luftstroms aus dem Bodenabschnitt in das Rohr am ersten Endpunkt, um das Lösemittel in das Rohr vom ersten Endpunkt zum zweiten Endpunkt zu leiten.

14. Eine Methode zum Zubereiten eines Getränks aus einem Lösemittel und Zutaten, unter Verwendung eines Behälters, der das Lösemittel enthält, und eines Aufgießers, der die Zutaten enthält, wobei die Methode die folgenden Schritte umfasst:
- Leiten des Lösemittels aus dem Behälter in den Aufgießer,
- Leiten des Lösemittels im Aufgießer aus dem Behälter heraus,
- Leiten des Lösemittels im Aufgießer zurück in den Behälter.

## Revendications

1. Appareil (10) pour la préparation d'une boisson à partir d'un solvant (11) et d'ingrédients (12), ledit appareil comprenant :
- un récipient (13) destiné à contenir ledit solvant,
- un infuseur (14) destiné à contenir lesdits ingrédients,
- un premier système (15) destiné à acheminer le solvant dudit récipient jusqu'audit infuseur,
**caractérisé en ce que** l'appareil comprend en outre
- un second système conçu pour adopter une première position (P1) pour amener le solvant se trouvant dans l'infuseur à sortir dudit récipient, et une seconde position (P2) pour ramener le solvant se trouvant dans l'infuseur dans ledit récipient.

2. Appareil selon la revendication 1, dans lequel ledit second système est l'infuseur (14) lui-même.

3. Appareil selon la revendication 1, dans lequel ledit second système comprend un ensemble d'égouttage monté sur ledit infuseur.

4. Appareil selon la revendication 2, dans lequel ledit infuseur comprend un ensemble d'égouttage ayant une première extrémité (E1) et une seconde extrémité (E2), ladite première extrémité (E1) étant destinée à communiquer avec un solvant se trouvant à l'intérieur dudit infuseur, ledit récipient comprenant des parois qui sont formées de manière à avoir une section asymétrique telle que ladite seconde extrémité (E2) peut déboucher à l'extérieur dudit récipient dans ladite première position (P1), et telle que ladite seconde extrémité (E2) peut déboucher à l'intérieur dudit récipient dans ladite seconde position (P2).

5. Appareil selon la revendication 2, dans lequel ledit récipient comprend une voie de sortie (EP), et dans lequel ledit infuseur comprend un ensemble d'égouttage ayant une première extrémité (E1) et une seconde extrémité (E2), ladite première extrémité (E1) étant destinée à communiquer avec un solvant se trouvant à l'intérieur dudit infuseur, ladite seconde extrémité (E2) étant destinée à communiquer avec ladite voie de sortie (EP) dans ladite première position (P1) et à déboucher à l'intérieur dudit récipient dans ladite seconde position (P2).

6. Appareil selon les revendications 4 ou 5, dans lequel ledit ensemble d'égouttage comprend une structure de type conduit ouvert (DA1).

7. Appareil selon les revendications 4 ou 5, dans lequel ledit ensemble d'égouttage comprend un ensemble formant tuyau (DA2).

8. Appareil selon la revendication 5, dans lequel ledit ensemble d'égouttage forme un trou (DA3) dans les parois dudit infuseur.

9. Appareil selon les revendications 3, 4 ou 5, dans lequel ledit ensemble d'égouttage comprend un ensemble formant siphon (DA4).

10. Appareil selon la revendication 2, dans lequel ledit infuseur est conçu pour passer en tournant de ladite première position (P1) à ladite seconde position (P2) et pour passer en tournant de ladite seconde position (P2) à ladite première position (P1).

11. Appareil selon la revendication 10, comprenant en outre un actionneur (AC) destiné à faire tourner ledit infuseur.

12. Appareil selon les revendications 1, 2 ou 3, dans lequel ledit premier système comprend une pompe à liquide (15) destinée à pomper le solvant dudit récipient dans ledit infuseur.

13. Appareil selon les revendications 1, 2 ou 3, dans lequel ledit premier système comprend :
- un tube (T) placé dans le récipient, ledit tube ayant une première extrémité (EX1) placée à proximité d'une partie inférieure (BP) du récipient, et une seconde extrémité (EX2) allant jusqu'à l'infuseur 14, et
- une pompe à air (AP) destinée à produire un flux d'air qui sort dans ladite partie inférieure et pénètre dans le tube au niveau de ladite première extrémité, afin d'amener ledit solvant se trouvant dans ledit tube de ladite première extrémité à ladite seconde extrémité.

14. Procédé permettant de préparer une boisson à partir d'un solvant et d'ingrédients en utilisant un récipient contenant le solvant et un infuseur contenant les ingrédients, ledit procédé comprenant les étapes suivantes :
- acheminement du solvant dudit récipient jusqu'audit infuseur,
- sortie du solvant se trouvant dans l'infuseur dudit récipient,
- retour du solvant se trouvant dans l'infuseur dans ledit récipient.
